# EUROPEAN PATENT APPLICATION

(11) **EP 4 509 667 A1**
(43) Date of publication of application: **19.02.2025**
(21) Application number: 23461637.3
(22) Date of filing: 14.08.2023
(51) Int. Cl.: E03F 1/00, B08B 9/08, B64D 11/02, E03F 5/10

(54) **WASTE TANK ASSEMBLY**

(71) Applicant: Goodrich Corporation, Charlotte, NC 28217 (US)
(72) Inventor: TUREK, Lukasz, 51-317 Wroclaw (PL); KROCZEK, Piotr, 51-317 Wroclaw (PL)
(74) Representative: Dehns

(57) **Abstract**

A waste tank assembly comprising: a tank (100) having a top end (102) configured to be connected, in use, to receive waste via one or more ports (110, 112, 114), and an open bottom end (104), the tank defining an interior (108); a waste cartridge (200) removably received in the tank interior and having one or more ports (212, 214, 216) configured to be fluidly connected to the one or more ports of the tank to receive the waste in an interior volume (210) of the cartridge; and a closure part (300) for securing the waste cartridge inside the tank interior, the closure part openable to allow removal of the cartridge from the tank interior via the open end.

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank.

There is, therefore, a need for a cleaning arrangement that can ensure improved cleaning of the tank in a simple and efficient manner.

### SUMMARY

According to the present disclosure, there is provided a waste tank assembly comprising: a tank having a top end configured to be connected, in use, to receive waste via one or more ports, and an open bottom end, the tank defining an interior; a waste cartridge removably received in the tank interior and having one or more ports configured to be fluidly connected to the one or more ports of the tank to receive the waste in an interior volume of the cartridge; and a closure part for securing the waste cartridge inside the tank interior, the closure part openable to allow removal of the cartridge from the tank interior via the open end.

A cleaning method is also provided.

### BRIEF DESCRIPTION

Examples of the waste tank assembly according to this disclosure will be described with reference to the drawings. It should be noted that these are merely examples and variations are possible within the scope of the claims.
Figure 1 shows an example of a known tank and rinse arrangement for the purposes of explanation.
Figure 2 is shown to explain the problem of the known device such as shown in Fig. 1.
Figure 3 shows an example of a waste tank assembly according to the disclosure.
Figure 4 shows a sectional view of a tank assembly according to the disclosure.
Figure 5 shows the component parts of a tank assembly according to the disclosure.
Figure 6 illustrates the use of a waste tank assembly according to the disclosure.
Figure 7 shows an example of a seal that may be provided in a waste tank assembly according to the disclosure.
Figure 8 shows a possible fixation arrangement that may be provided in a waste tank assembly according to the disclosure.
Figure 9 is provided to illustrate how a waste tank assembly according to the disclosure can be assembled.
Figure 10 shows a cartridge of a waste tank assembly according to the disclosure.
Figures 11A and 11B are provided to compare a conventional tank cleaning assembly with a waste tank assembly according to the disclosure.

### DETAILED DESCRIPTION

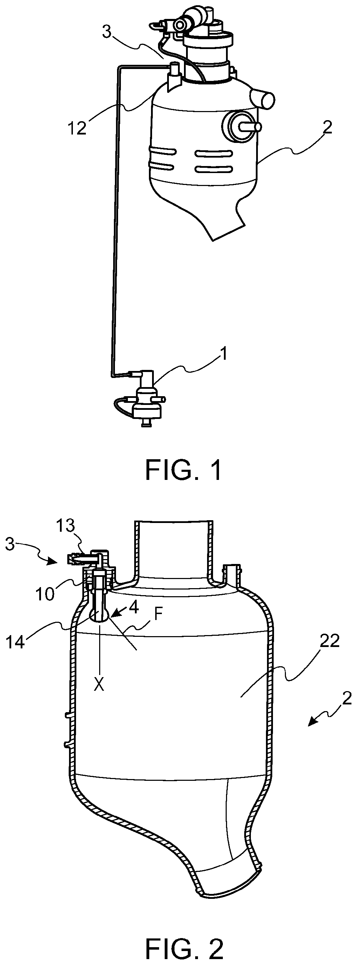

A typical rinse device is shown in Figs. 1 and 2. A rinse nozzle 3 is shown mounted in the wall 12 of a tank 2 or vat or other reservoir. The rinse nozzle 3 is connected, in use, to a rinse port 1 from which rinse fluid is provided to the rinse nozzle from a rinse fluid supply (not shown). Figure 2 shows, in cross-section, the rinse nozzle 3 mounted in the wall 12 of the tank 2, at the top of the tank. Apertures or jets 4 are formed in the nozzle 3 such that as rinse fluid is provided to the nozzle 3 it is sprayed out through the jets 4 around the interior 22 of the tank to clean the tank. A typical nozzle 3 comprises a housing 10, one end of which is provided with a fitting 13 arranged to be attached to a pipe or the like via which pressurised water or cleaning solution is provided. At the other end of the housing through which the pressurised fluid flows, which extends into the tank, is mounted a rinse head 14 mounted to rotate relative to the housing 10. The rinse head is arranged to rotate about an axis of rotation X which is the axis through the housing from the one end to the other end.

The rinse head 14 is provided with a number of holes or jets 4 via which the pressurised fluid F forced through the housing is ejected into the tank. The jets can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid F may not adequately reach the bottom or other locations in the interior of the tank, or at least not with sufficient force to adequately clean the tank. Furthermore, as can be seen in Fig. 2, the jets do not clean the tank in a symmetrical manner.

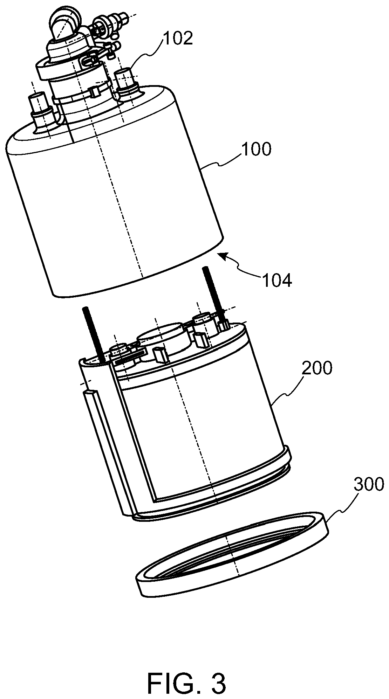

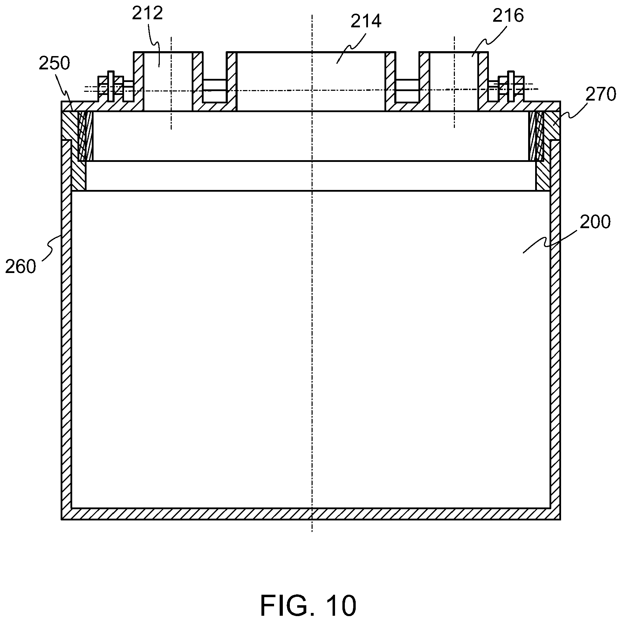

The waste tank assembly according to this disclosure is designed to address these problems as will be described with reference to Figs. 3 to 11.

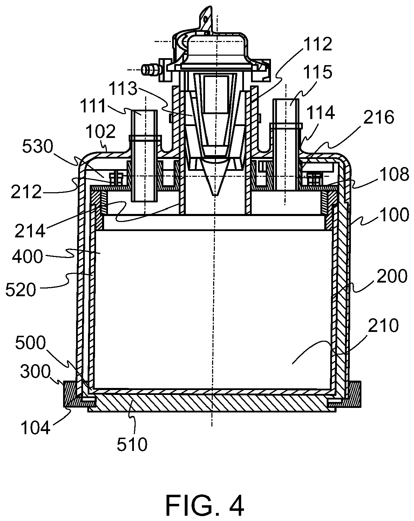

As seen in Fig. 3, the waste tank assembly according to the disclosure has a modified tank 100, having a top region 102 arranged to connect to the system from which waste is expelled into the waste tank, similar to existing waste tanks, and an open bottom end 104; a cartridge 200 removably mounted within the tank, and a closure part 300 mountable to the open bottom end 104 of the tank 100 to secure the cartridge 200 within the tank, the closure part 300 being openable to allow removal of the cartridge from the tank from the open bottom end. The modified tank according to the disclosure is thus in the form of a sleeve, open at one end, the sleeve defining an interior 108 (Fig. 4) configured to receive the waste tank cartridge. The cartridge, when inside the tank, therefore defines the interior 210 (Fig. 4) of the waste tank, to receive the waste - the cartridge providing a barrier between the waste and the tank interior 108. The cartridge connects to the top region 102 of the tank 100 such that the waste entering the tank assembly is directed into the interior 210 of the cartridge. The cartridge can then be removed from the tank e.g. when full or at other times when the tank assembly is to be emptied, by opening the closure part 300 and removing the cartridge from the open end 104 of the tank. The waste in the cartridge than then be disposed of either by emptying the cartridge or by disposing of the cartridge including the contained waste. If the cartridge is reusable, it can then be replaced in the tank and secured by the closure part. If the cartridge is disposable, a new cartridge can then be mounted into the tank which is then ready to receive more waste.

As mentioned above, the top region 102 of the tank 100 is provided with fittings for attachment to the system from which the waste is ejected into the tank. Various types of fittings are possible. In the example shown, the tank has an inlet port 110 which can receive an inlet pipe 111 which, in use, is connected to the system such that waste from the system passes along the inlet pipe 111, through the tank inlet port 110 into the waste tank. The fittings may also include a port 112 for receiving some form of propeller system or suction device or demister 113 which can assist in forcing the waste into the waste tank. One or more additional ports 114 can be provided in the top region of the tank for other parts or accessories. For example, a level sensor may provide in an accessory tube 115 to detect the level of waste in the tank. These fittings may vary and can correspond to the fittings on known waste tanks for collecting the waste in the tank assembly.

In the assembly according to the disclosure, the waste is collected in a waste cartridge 200 located within the interior 108 of the tank 100. The waste 400 is, therefore, not in contact with the interior of the tank itself, and so the tank interior does not become contaminated and does not need to be cleaned. All of the contamination is retained within the removable cartridge 200.

The cartridge 200 may also be provided with ports 212, 214, 216 arranged to align with the ports 110, 112, 114 and fittings 111, 113, 115 in the top region of the tank, to ensure direct passage of the waste through the top region of the tank into the cartridge 200. Fig. 4 shows waste 400 accumulated in the cartridge 200.

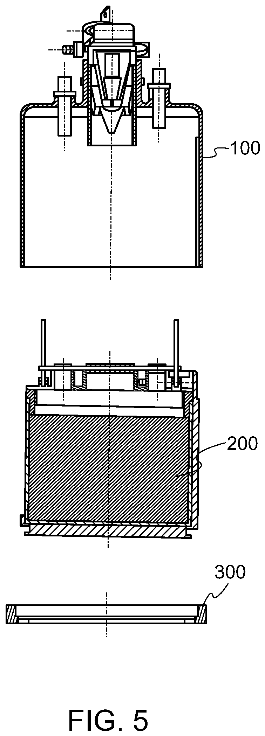

To dispose of the waste from the tank assembly, the cartridge is removed from the open end 104 of the tank 100 by opening the closure part (e.g. a locking nut) 300. The example shows the closure part 300 in the form of a locking nut that fastens, e.g. by a threaded/screw fastening, to the open bottom end of the tank and extends radially inwards sufficiently to provide a flange or ledge to prevent the cartridge passing the closure part when it is fastened. The nut can then be unscrewed and removed from the open end to release the cartridge. Other fastening or retaining means can also be envisaged for releasably securing the cartridge in the tank. The manner in which the cartridge 200 can be quickly disassembled from the tank for waste disposal can be seen, for example, in Fig. 5.

In an example, the cartridge is mounted to a support 500 which acts as a holder for the cartridge and can also be configured to ensure that the cartridge is correctly fitted and oriented in the tank.

The support 500 defines a base 510, on which the cartridge is supported from below, and an arm 520 and an attachment part 530 which together form a clip structure into which the cartridge is fitted and secured. The support provides structure for the cartridges as it is removed from the tank (as seen in Fig. 5). The cartridge 200 is then unclipped from the support 500 to be emptied or disposed of, and the (reusable) cartridge or new cartridge can then be fitted into the support to be mounted into the tank for the next waste collection.

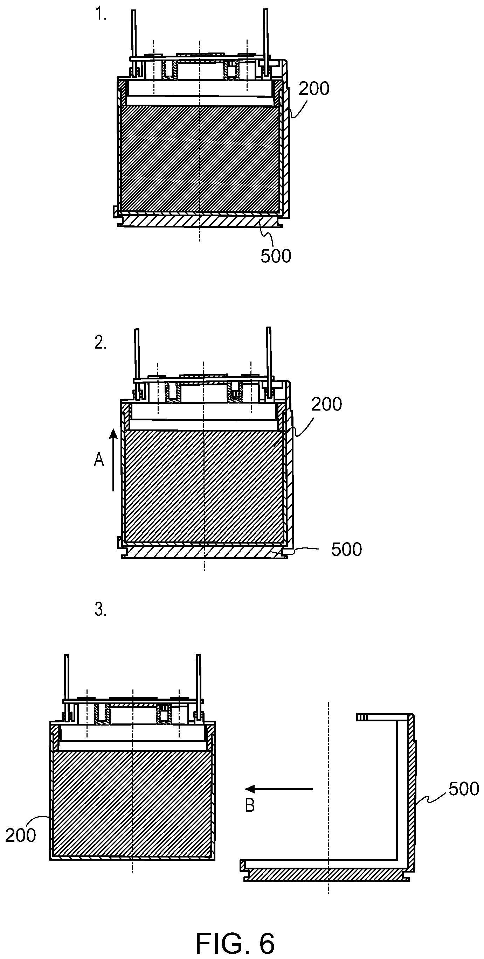

An example of such a support will be described with reference to Fig. 6. At stage 1., the cartridge 200, mounted in the support 500, has been released from the tank 11 (as described above with reference to Fig. 5). The dispose of the cartridge (or the waste in the cartridge, if reusable), the cartridge needs to be removed from the support 500. In the example shown, the arm 520 and the attachment part 530 are arranged such that when the cartridge is secured in the support 500, the attachment part extends over the top of the cartridge. The remove the cartridge from the support, the cartridge is lifted (in the direction of arrow A) relative to the support to allow release from the attachment part 530 and the cartridge is then slid out sideways (direction of arrow B) to free it from the support 500.

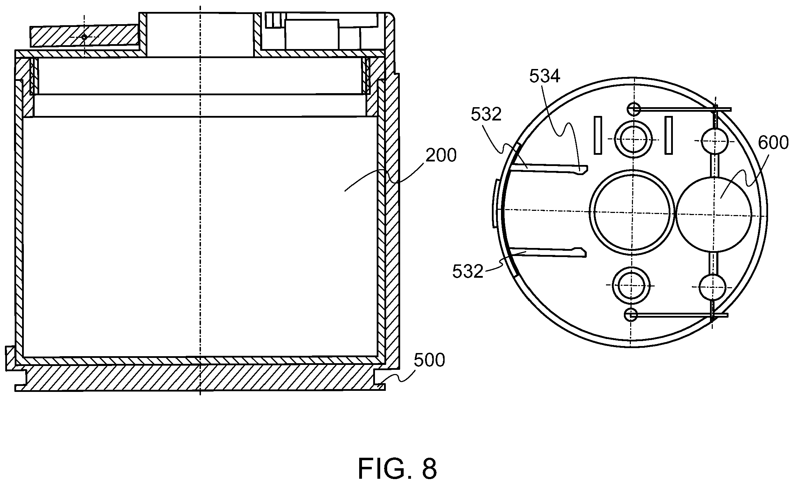

The attachment part 530 in this example is in the form of a snap-fitting as best seen in Fig. 8 which shows the cartridge and support from a side view (as in Fig. 6) and also from a top view, where the snap fitting 530 can best be seen. In this example, it can be seen that the attachment part includes two snap-fit arms 532 extending from the support arm part 520, radially inwards across the top of the cartridge. The two snap-fit arms 532 are configured to extend either side of a part on the top of the cartridge, in this example, and have enlarged ends 534 that, when the cartridge is seated in the support, on the support base 510, abut against the port so that the port can not move out of the attachment part. As the cartridge is lifted (Fig. 6, stage 2.) however, the lower, narrower neck of the port can move sideways past the enlarged ends 534 as seen in Fig. 6, stage 3.

To install the cartridge in the support, the procedure is the reverse of Fig. 6 and the cartridge engages with the attachment part in a snap fit. This cooperation between the cartridge and the support is provided by a shaped connected to ensure a POKA-YOKE assembly - i.e. the design is such as to eliminate the possibility of error in assembling the cartridge. Only one, correct, orientation is possible.

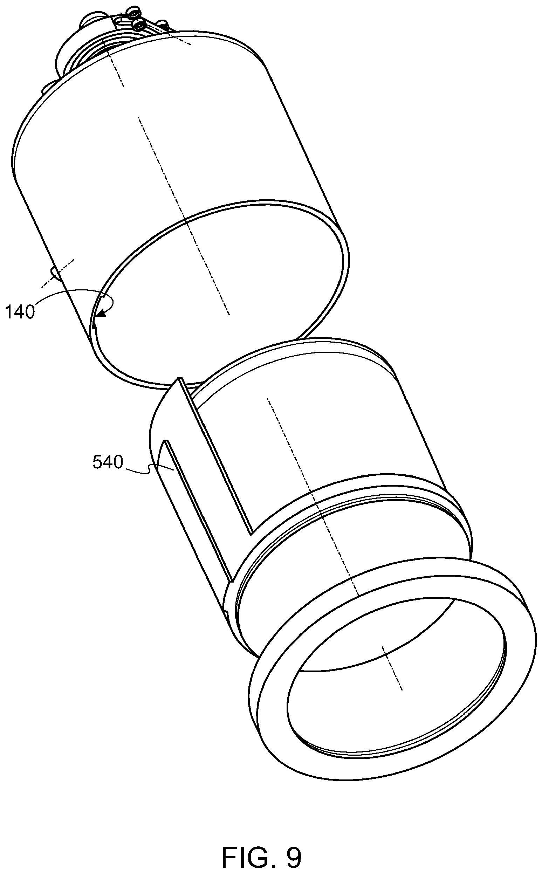

The correct orientation and securement of the cartridge in the tank can be further improved by forming a shaped feature 540 e.g. a rib or protrusion on the support arm, and a corresponding shape e.g. a recess 140 on the tank interior as seen in Fig. 9.

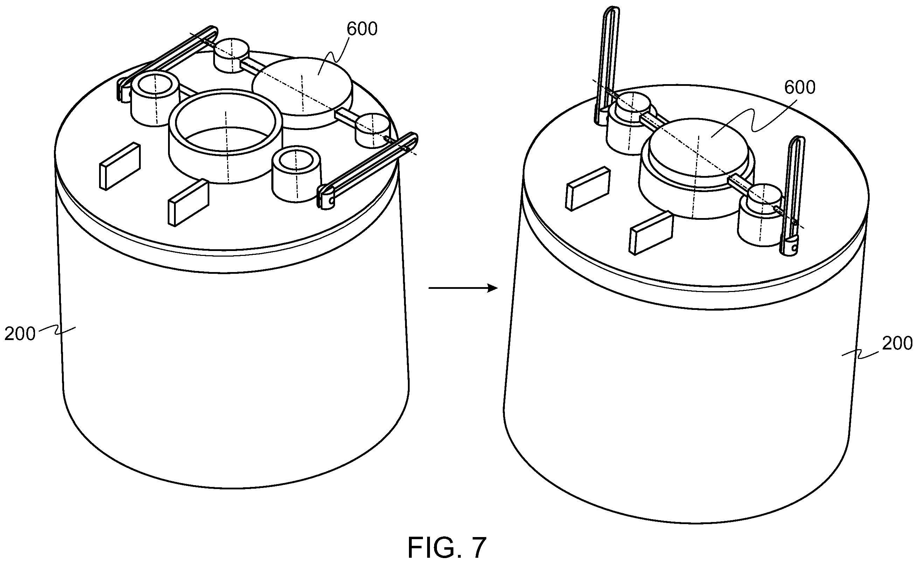

To avoid leakage or spillage of waste as the cartridge is removed from the tank, a seal or plug 600 may be provided to sealing close the ports 212, 214, 216 on the cartridge. Various types of seal or plug may be provided, including individual stoppers that are pushed into the ports by the maintenance personnel. One example of a suitable plug assembly is shown in Figs. 7 and 8. Here, a unitary plug 600 is provided shaped to fit over all of the ports. The plug may be pivotally attached to the top of the cartridge such that it remains with the cartridge at all times. While the cartridge is assembled in the tank, the plug 600 is pivoted away from the ports, so that the ports can be attached to the necessary fittings (left-hand side of Fig. 7). When the cartridge is removed, the plug 600 can be pivoted into position in the ports (right-hand side of Fig. 7)

Various configurations for the cartridge 200 are possible. In a simplest implementation, the entire cartridge, including the top part containing the ports 212, 214, 216 and the main body of the cartridge that contains the waste may be disposable.

Typically, the top part 250, with the machined ports, is the most expensive part of the cartridge, and so, in some embodiments, this may be a detachable part of the cartridge, so that it can be re-used with a different cartridge body 260. The top part 250 may be connected to the main body 260 by a sleeve 270. In such examples, it is possible just to exchange the main body of the cartridge and keep the top part and the sleeve.

Alternatively, the entire cartridge may be re-usable. The main body of the cartridge may be, e.g. made of cleanable plastic or steel. The top part can be removed allowing access to the main body for cleaning before re-use.

In another implementation, the main body of the cartridge could be made of an expandable material such as rubber, that expands as the cartridge fills with waste.

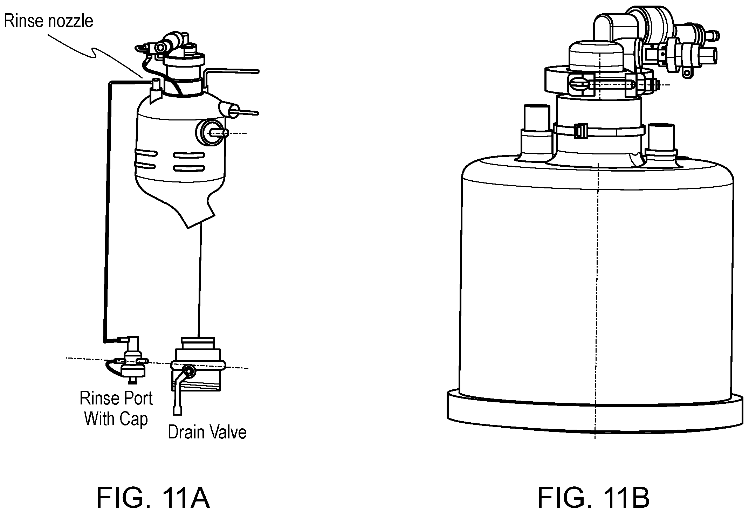

The simplicity and the compact design of a waste tank assembly according to the disclosure can be seen in the comparison with the conventional assembly in Fig. 11. The assembly according to this disclosure can avoid the needs for a rinse nozzle, rinse port and drain valve, as well as hydraulic tubes and fresh water. Tank cleaning is therefore simpler and quick using the exchangeable cartridge. The problem of incomplete cleaning of the tank interior is also obviated. Furthermore, the cleaning can be performed at a remote cleaning facility rather than where the tank is installed.

The arrangement according to this disclosure therefore provides a simple, inexpensive and effective way of thoroughly cleaning a waste tank, and of preventing contaminants coming into direct contact with the tank. This simplifies cleaning and also avoids any chemical reaction between the waste contaminants/other substances and the tank. Furthermore, it is possible for the cleaning process to be performed off-site and without the need for water and with the need for the various rinsing and spray components commonly required.

## Claims

1. A waste tank assembly comprising:
a tank (100) having a top end (102) configured to be connected, in use, to receive waste via one or more ports (110, 112, 114), and an open bottom end (104), the tank defining an interior (108);
a waste cartridge (200) removably received in the tank interior and having one or more ports (212, 214, 216) configured to be fluidly connected to the one or more ports of the tank to receive the waste in an interior volume (210) of the cartridge; and
a closure part (300) for securing the waste cartridge inside the tank interior,
the closure part openable to allow removal of the cartridge from the tank interior via the open end.

2. The assembly of claim 1, the tank top end (102) provided with fittings (111, 113, 115) for advancing waste into the cartridge in the tank.

3. The assembly of claim 1 or 2, wherein the cartridge is provided with a top part having one or more ports (212, 214, 216) arranged to be in fluid communication with the one or more ports (110, 112, 114) of the tank.

4. The assembly of any preceding claim, wherein the closure part is a lock not (300) arranged to be fastened to the open end (104) of the tank to retain the cartridge (200) in the tank.

5. The assembly of any preceding claim, further comprising a support (500) configured to hold the cartridge in position inside the tank.

6. The assembly of claim 5, wherein the support includes a base (510) to support the cartridge and an attachment part (530) to releasably attach the cartridge to the support.

7. The assembly of claim 6, wherein the attachment means includes a snap-fit structure from which the cartridge can be released by lifting the cartridge relative to the support.

8. The assembly of any of claims 5 to 7, wherein the support includes an alignment features and the tank has, on its interior, a mating structure to secure and align the support relative to the tank.

9. The assembly of any preceding claim, further comprising a seal to close the cartridge ports (212, 214, 216).

10. The assembly of claim 9, wherein the seal comprises a plug assembly secured to the cartridge and moveable between a port open position and a port closed position.

11. The assembly of any preceding claim, wherein the cartridge is fully disposable.

12. The assembly of any of claims 1 to 10, wherein the cartridge is fully re-usable.

13. The assembly of any of claims 1 to 10, wherein a top part of the cartridge, containing the one or more ports is re-usable and a body of the cartridge in which the waste accumulates is disposable.

14. The assembly of any preceding claim, further comprising an inlet tube (111) extending through a port (110) in the tank via which waste enters the tank assembly.

15. The assembly as claimed in any preceding claim, further comprising a level sensor for providing an indication of the level of waste in the cartridge.
